# EUROPÄISCHE PATENTSCHRIFT

(11) **EP 0 634 282 B1**
(45) Veröffentlichungstag und Bekanntmachung des Hinweises auf die Patenterteilung: **25.09.1996**
(21) Anmeldenummer: 94110694.0
(22) Anmeldetag: 09.07.1994
(51) Int. Cl.: B41M 3/14, G03C 5/08, G09F 3/02, B42D 15/00, G03G 21/04

(54) **Verfahren zur Herstellung eines Antikopierfilms**
Method for preparing an anti-copy film
Méthode pour la fabrication d'un film anti-copie

(30) Priorität: 17.07.1993 DE 4324087
(43) Veröffentlichungstag der Anmeldung: 18.01.1995
(73) Patentinhaber: BASF Magnetics GmbH, 68165 Mannheim (DE)
(72) Erfinder: Steininger, Dr. Helmut, D-67551 Worms (DE); Heilmann, Dr. Peter, D-67098 Bad Duerkheim (DE); Willis, Michael, Histon, Cambridge (GB)
(74) Vertreter: Karau, Wolfgang, Dr.

(56) Entgegenhaltungen:
- WO-A-94/04367
- NL-A- 8 601 250

## Beschreibung

Die Erfindung betrifft ein Verfahren zur Herstellung eines Antikopierfilms, bei dem auf die erste Lage eines transparenten, mehrlagigen Films beidseitig undurchsichtige, streifenförmige Abdeckungen gleichmäßig wiederkehrend und definiert zueinander versetzt und auf die Unterseite mindestens einer zweiten Lage ebensolche Abdeckungen definiert versetzt zu den ersteren drucktechnisch aufgebracht werden, sowie einen demgemäß hergestellten Kopierfilm.

Aus der NL-A-86 01 250 ist ein derartiger Anti-Kopierfilm bekannt, der aus zumindest einer Lage eines durchsichtigen Materials besteht, auf dessen Oberflächen relativ zueinander angeordnete, undurchsichtige Linienmuster vorhanden sind, so daß eine unter einem bestimmten kleinen Winkel auftreffende Lichtstrahlung nicht durchgelassen wird. Dabei soll die Linienbreite ungefähr dem Abstand zwischen den Linien entsprechen, so daß eine Überlappung der Linien auf den zwei gegenüberliegenden Oberflächen in Bezug auf eine senkrecht auftreffende Strahlung nicht erfolgt. Der Abstand zwischen den die Linienmuster tragenden zwei Oberflächen soll etwa das Doppelte der Linienbreite betragen, so daß eine Überlappung ausgeschlossen ist. Dieser bekannte Anti-Kopierfilm soll durch graphische oder fotographische Aufbringung der Linien auf transparentes Material herstellbar sein.

Die nicht veröffentlichte Schrift WO 94/04367 beschreibt entweder nur Ein-Film-Ausführungen mit Bedruckungen oder Druckbeschichtungen auf jeder Seite oder 3- oder mehrlagige Film- oder Schichtkombinationen, die übereinander angeordnet sind, ohne daß das Herstellverfahren oder die Art des Übereinanderanordnens beschrieben sind.

Der auf beschriebene Verfahrensweise erhaltene Antikopierfilm soll durch die geometrische Anordnung der Abdeckungen auf den Lagen, d.h. durch in der Gesamtanordnung überlappende Versetzung der Abdeckungen, für einen Sichtwinkelbereich auf den Film (Kopierrichtung) undurchsichtig und in davon abweichender, etwas schräger Blickrichtung durchsichtig erscheinen. Dies erfordert ein präzises Positionieren sowohl der Abdeckungen auf den einzelnen Lagen als auch der Lagen zueinander bei der Herstellung des Antikopierfilms. Bei einer Einzelherstellung der Lagen und deren nachfolgendem Zusammenfügen zu dem Antikopierfilm ist die geforderte Genauigkeit kaum oder nur mit erheblichem, technischem Aufwand erreichbar.

Dementsprechend liegt vorliegender Erfindung die Aufgabe zugrunde, ein Verfahren zur Herstellung eines Antikopierfilms zu entwickeln, bei dem ohne großen technischen Aufwand die Anordnung der Abdeckungen auf den Filmlagen und deren Zusammenfassen zum Antikopierfilm mit der erforderlichen Genauigkeit vorgenommen werden kann, sowie einen derartigen Antikopierfilm zweckmäßig auszubilden.

Zur Lösung der Aufgabe wird ein Verfahren gemäß Anspruch 1 geschilderten Art bereitgestellt, bei dem die Abdeckungen in den definiert versetzten Anordnungen auf einer einzigen Filmbahn in nebeneinanderliegenden oder aufeinanderfolgenden Abschnitten aufgebracht werden, die den einzelnen Lagen entsprechen, danach die Filmbahn in die einzelnen Antikopierfilmformate getrennt wird und die einzelnen Formate entlang der Abschnittslinien in die Lagen des Antikopierfilms gefaltet werden, wobei das Trennen und Falten auch in umgekehrter Reihenfolge vorgenommen werden kann.

Das Verfahren nach der Erfindung ist anhand in der Zeichnung schematisch dargestellter Ausführungsbeispiele nachfolgend näher beschrieben.

Zweckmäßig können die Abdeckungen in den definiert versetzten Anordnungen in einem Drucklauf simultan auf die einzige Filmbahn aufgebracht werden, was sehr zeitgünstig ist. Vorteilhaft ist es, wenn vor dem Aufeinanderfalten der Lagen des Films auf jeweils mindestens eine der zur Anlage kommenden Seiten Klebstoff und auf den anderen Seiten ein vor mechanischer oder chemischer Einwirkung schützender oder Lichtreflexion verhindernder Schutzlack aufgetragen wird.

Damit wird ein nach allen Seiten geschützter Verbund eines Antikopierfilms nach dem erfindungsgemäßen Verfahren erhalten. Es ist günstig, wenn der Film für die aufzubringenden Abdeckungen wenigstens einseitig die Lichtreflektion reduzierend mattiert ausgebildet ist.

Es ist ferner zweckmäßig, Druckfarben für die Abdeckungen zu verwenden, die strahlungshärtend sind und geometrische Veränderungen der gedruckten Abdeckungen beim Trockenvorgang minimieren.

Die Aufgabe der Erfindung wird durch die Ausbildung des Antikopierfilms gemäß Patentanspruch 6 gelöst.

Damit wird ein wirtschaftlich hertellbarer Antikopierfilm bereitgestellt, der aus einer einzigen Filmbahn gebildet ist und dessen Abdeckungen dreifach übereinander, einander überlappend angeordnet sind.

Der Antikopierfilm ist wiederum mit geeignetem Klebstoff mit sich selbst in vorgegebener Anordnung verbunden und die Außenseiten können mit einem Schutzlack versehen sein.

Die Druckfarben der Abdeckungen sind vorzugsweise strahlungshärtend und ergeben dimensionsstabile Bedruckungen.

Ein Antikopierfilm nach der Erfindung besteht überraschenderweise aus einer einzigen transparenten Filmbahn, auf der in Längsrichtung oder Querrichtung mindestens zwei parallel zueinander oder hintereinander angeordnete, mit streifenförmigen Abdeckungen bedruckte Abschnitte vorgesehen sind.

Es zeigen
- Figur 1: ein auf ein Dokument aufgebrachter, aus einer Filmbahn hergestellter, mehrlagiger Antikopierfilm im Querschnitt
- Figur 2: eine Filmbahn in Draufsicht, mit streifenförmigen Abdeckungen in nebeneinanderliegenden Abschnitten
- Figur 3: eine Filmbahn in Draufsicht, mit streifenförmigen Abdeckungen in aufeinanderfolgenden Abschnitten
- Figur 4 und 5: eine Filmbahn wie in Figur 2 und 3, jedoch mit längs der Filmbahn verlaufenden Abeckungen

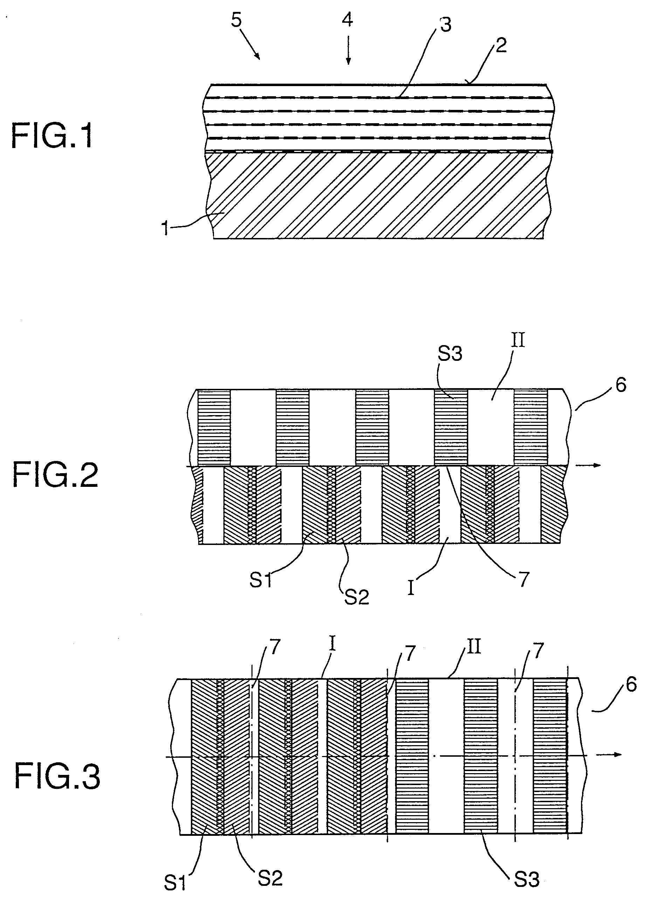

Der nach dem erfindungsgemäßen Verfahren herzustellende Antikopierfilm ist in Figur 1 im Querschnitt dargestellt und besteht aus einem in der Größe des abzudeckenden Dokuments 1 oder Teilen davon vorliegenden Film 2 aus transparentem, mehrlagigem Material mit gleichmäßig wiederkehrenden, undurchsichtigen oder reflektierenden Abdeckungen, die auf die einzelnen Lagen aufgedruckt sind. Vorteilhafterweise werden strahlungshärtende, geometrische Veränderungen beim Trocknen minimierende Druckfarben verwendet. Durch zueinander versetzte Anordnung der Abdeckungen 3 erscheint ähnlich einer verstellbaren Jalousie der Film entsprechend der Kopierrichtung in der Draufsicht 4 undurchsichtig, in schräger Blickrichtung 5 dagegen durchsichtig.

Die in den Figuren 2 und 3 dargestellten Ausführungsbeispiele zeigen die Herstellung eines zweilagigen Antikopierfilms, indem eine transparente Filmbahn 6 in Längsrichtung (Figur 2) oder quer zur Bahn (Figur 3) in zwei parallele, mit den streifenförmigen Abdeckungen S1, S2 sowie S3 bedruckte Abschnitte I und II eingeteilt wird. Sind mehr als zwei Lagen, wie in Figur 1, vorzusehen, ist die Filmbahn in die entsprechende Anzahl von Abschnitten einzuteilen.

Der der ersten Lage entsprechende Abschnitt I ist auf beiden Seiten mit den undurchsichtigen oder reflektierenden, streifenförmigen Abdeckungen S1 und S2 bedruckt, der Abschnitt II der zweiten Lage mit den Abdeckungen S3 nur auf der Seite, die beim späteren Aufeinanderlegen der Lagen der ersten Lage abgekehrt ist.

Die Abdeckungen S1, S2 und S3 sind gleichmäßig wiederkehrend so angeordnet, daß sich beim späteren Aufeinanderlegen der Lagen die in Figur 1 zu sehende, eingangs erläuterte Versetzung der Abdeckungen ergibt. Weitergehende geometrische Betrachtungen über die Anordnung der Abdeckungen sind in der nicht vorveröffentlichten deutschen Patentanmeldung P 42 26 906 (welche der obengenannten WO 94/04367 entspricht) ausgeführt.

Zum drucktechnischen Aufbringen der Abdeckungen auf die Filmbahn eignen sich die üblichen Druckverfahren, wie Tiefdruck, Offset, Trocken-Offset- und Naß-Trocken-Offsetdruck usw.. Es hat sich als vorteilhaft erwiesen, sämtliche Abdeckungen mit Hilfe eines Präzisions-Simultandruckwerks in einem Durchlauf der Filmbahn aufzubringen. Dadurch wird eine genaue Positionierung der Abdeckungen zueinander erreicht. Diesbezüglich ist noch von Vorteil, daß die Abdeckungen in unmittelbarer, räumlicher Nachbarschaft gedruckt werden.

Nach dem Aufdrucken der Abdeckungen wird die Filmbahn 6 in die einzelnen Antikopierfilmformate getrennt. Durch anschließendes Falten der Formate entlang der Abschnittslinien 7 in die aufeinanderliegenden Lagen wird der gebrauchsfertige Antikopierfilm erhalten. Gegebenenfalls kann auch das Falten vor dem Trennen zweckmäßig sein.

Es ist zweckmäßig, die zur Anlage kommenden Seiten miteinander zu verkleben, beispielsweise mittels eines Kaschierklebstoffs. Als Klebstoffauftrag, der bei Anwendung des Antikopierfilms den unlösbaren Verbund zwischen Antikopierfilm und Dokument herstellt, eignen sich besonders Heißschmelzklebstoffe, beispielsweise Heißsiegelkleber oder ein dauerklebender Haftkleber. Im letzten Falle verhindert ein den Haftkleber abdeckender Releasefilm, der vor der Anwendung abzuziehen ist, das ungewollte Verkleben. Zur Verminderung der Reflexion und auch des Verschleisses des Antikopierfilms kann auf die dem Betrachter zugewandten Seiten der Filmlagen eine Schutzschicht aus einer dünnen, kaschierten Folie, einem organischen Lack oder einer anorganischen Dünnschicht, gegebenenfalls auch einer plasmapolymerisierten Schicht aufgetragen werden, die Klebstoffschicht befindet sich dann auf der dem Dokument zugewandten Seite. Zur Reduzierung der Reflexion kann auch ein einseitig mattierter Film verwendet werden.

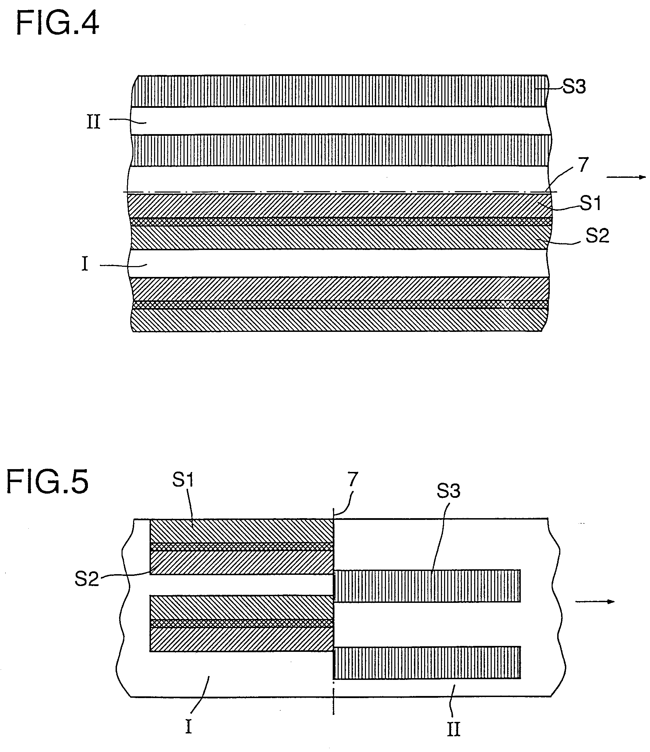

Bei den vorstehend beschriebenen Ausführungsbeispielen verlaufen die streifenförmigen Abdeckungen quer zur Filmbahn. Der damit erreichte Kopierschutz kann auch erhalten werden, wenn die Abdeckungen parallel zur Filmbahn verlaufen, wie in Figur 4 und 5 zu sehen.

## Patentansprüche

1. Verfahren zur Herstellung eines Antikopierfilms, bei dem auf die erste Lage eines transparenten, mehrlagigen Films (2) beidseitig undurchsichtige, streifenförmige Abdeckungen (S1, S2) gleichmäßig wiederkehrend und definiert zueinander versetzt und auf die Unterseite mindestens einer zweiten Lage ebensolche Abdeckungen (S3) definiert versetzt zu den ersteren drucktechnisch aufgebracht werden, dadurch gekennzeichnet, daß die Abdeckungen (S1-S3) in den definiert versetzten Anordnungen auf eine einzige Filmbahn (6) in nebeneinanderliegenden oder aufeinanderfolgenden Abschnitten (I, II) aufgebracht werden, die den einzelnen Lagen entsprechen, danach die Filmbahn in die einzelnen Antikopierfilmformate getrennt wird und die einzelnen Formate entlang der Abschnittslinien (7) in die Lagen des Antikopierfilms gefaltet werden, wobei das Trennen und Falten auch in umgekehrter Reihenfolge vorgenommen werden kann.

2. Verfahren nach Anspruch 1, dadurch gekennzeichnet, daß die Abdeckungen (S1-S3) in den definiert versetzten Anordnungen in einem Drucklauf simultan auf die Filmbahn (6) aufgebracht werden.

3. Verfahren nach Anspruch 1 und 2, dadurch gekennzeichnet, daß vor dem Aufeinanderfalten der Lagen des Films (2) auf jeweils mindestens eine der zur Anlage kommenden Seiten Klebstoff und auf den anderen Seiten vor mechanischer oder chemischer Einwirkung schützender oder Lichtreflexion verhindernder Schutzlack aufgetragen wird.

4. Verfahren nach Anspruch 1 bis 3, dadurch gekennzeichnet, daß die Abdeckungen (S1-S3) auf einen mindestens einseitig die Lichtreflexion reduzierenden, mattierten Film aufgebracht werden.

5. Verfahren nach Anspruch 1 bis 4, dadurch gekennzeichnet, daß für die Abdeckungen (S1-S3) strahlungshärtende, geometrische Veränderungen beim Trocknen minimierende Druckfarben verwendet werden.

6. Antikopierfilm, bei dem auf einer ersten Lage eines transparenten, mehrlagigen Films (2) beidseitig undurchsichtige, streifenförmige Abdeckungen (S1, S2) gleichmäßig wiederkehrend und definiert zueinander versetzt und auf der Unterseite mindestens einer zweiten Lage ebensolche Abdeckungen (S3) definiert versetzt zu den ersteren drucktechnisch aufgebracht sind, dadurch gekennzeichnet, daß die Lagen aus auf einer einzigen Filmbahn (6) angeordneten, geometrisch aufeinanderfolgenden, mit streifenförmigen Abdeckungen versehenen, voneinander verschiedenen Abschnitten (I, II) bestehen, und daß die gleichmäßig wiederkehrende und definiert zueinander versetzte Anordnung der Abdeckungen (S1-S3) durch Falten der Filmbahn (6) und Übereinanderanordnen der verschiedenen Abschnitte (I, II) der Filmbahn (6) gebildet ist.

7. Antikopierfilm nach Anspruch 6, dadurch gekennzeichnet, daß auf wenigstens einer der durch Falten aufeinander zu liegen kommende Seiten der Abschnitte (I, II) der Filmbahn (6) ein Klebstoff vorgesehen ist.

8. Antikopierfilm nach Anspruch 7, dadurch gekennzeichnet, daß die nicht mit Klebstoff versehenen Seiten der Abschnitte (I, II) der Filmbahn (6) mit einem vor mechanischer und/oder chemischer Einwirkung schützenden und/oder Lichtreflexion verhindernden Schutzlack versehen sind.

9. Antikopierfilm nach einem der Ansprüche 6 bis 8, dadurch gekennzeichnet, daß die Abdeckungen (S1-S3) aus strahlungshärtenden, geometrische Veränderungen beim Trocknen minimierenden, Druckfarben bestehen.

10. Antikopierfilm nach einem der Ansprüche 6 bis 9, dadurch gekennzeichnet, daß derselbe aus einer transparenten Filmbahn besteht, auf der in Längsrichtung oder Querrichtung mindestens zwei parallel zueinander oder hintereinander angeordnete, mit streifenförmigen Abdeckungen (S1, S2, S3) bedruckte Abschnitte (I, II) vorgesehen sind.

## Claims

1. A process for the production of an anticopy film, in which opaque, strip-like coverings (S1, S2) are applied by printing to both sides of the first layer of a transparent, multilayer film (2) in a regularly repeating manner and offset to one another in a defined manner, and similar coverings (S3) are applied by printing to the underside of at least one second layer, offset to the first coverings in a defined manner, wherein the coverings (S1-S3) are applied to a single film web (6) in the arrangements offset in a defined manner in adjacent or successive sections (I, II) conforming to the individual layers, the film web is then separated into the individual anticopy film formats, and the individual formats are folded along the section lines (7) in the layers of the anticopy film, it also being possible for the separation and folding to be carried out in the reverse sequence.

2. A process as claimed in claim 1, wherein the coverings (S1-S3) are applied simultaneously to the film web (16) in a print run in the arrangements offset in a defined manner.

3. A process as claimed in claim 1 or 2, wherein, before the layers of the film (2) are folded onto one another, adhesive is applied to in each case at least one of the sides coming into contact, and a protective coating which protects against mechanical or chemical influences or prevents light reflection is applied to the other sides.

4. A process as claimed in any of claims 1 to 3, wherein the coverings (S1-S3) are applied to a film which has been rendered matt and reduces light reflection on at least one side.

5. A process as claimed in any of claims 1 to 4, wherein radiation-curing printing inks which minimize geometrical changes during drying are used for the coverings (S1-S3).

6. An anticopy film, in which opaque, strip-like coverings (S1, S2) are applied by printing to both sides of a first layer of a transparent, multilayer film (2) in a regularly repeating manner and offset to one another in a defined manner, and similar coverings (S3) are applied by printing to the underside of at least one second layer, offset to the first coverings in a defined manner, wherein the layers comprise sections (I, II) which are different from one another and are provided with strip-like coverings arranged on a single film web (6) in a geometrically successive manner, and wherein the regularly repeating arrangement of the coverings (S1-S3) offset to one another in a defined manner is formed by folding the film web (6) and arranging the various sections (I, II) of the film web (6) one on top of the other.

7. An anticopy film as claimed in claim 6, wherein an adhesive is provided on at least one of the sides of the sections (I, II) of the film web (6) which come to lie one on top of the other by folding.

8. An anticopy film as claimed in claim 7, wherein the sides of the sections (I, II) of the film web (6) which are not provided with adhesive are provided with a protective coating which protects against mechanical and/or chemical influences and/or prevents light reflection.

9. An anticopy film as claimed in any of claims 6 to 8, wherein the coverings (S1-S3) comprise radiation-curing printing inks which minimize geometrical changes during drying.

10. An anticopy film as claimed in any of claims 6 to 9, which comprises a transparent film web on which at least two sections (I, II) printed with strip-like coverings (S1, S2, S3) and arranged parallel to one another or after one another are provided in the longitudinal or transverse direction.

## Revendications

1. Procedé de fabrication d'un film anticopie, dans lequel on applique par impression, sur les deux faces de la première couche d'un film multicouche transparent (2), des masques en forme de bande opaques (S1, S2) de façon qu'ils se répètent régulièrement et soient décalés de manière définie les unes des autres et, sur la face inférieure d'au mains une deuxième couche, des masques semblables (S3) de façon qu'ils soient décalés de manière définie des premiers, caractérisé par le fait qu'on applique les masques (S1 à S3) dans les dispositions décalées de manière définie sur une bande unique de film (6) dans des parties situées l'une à côté de l'autre ou l'une derrière l'autre (I, II) qui correspondent aux différentes couches, on divise ensuite la bande de film en les formats individuels de film anticopie et on plie ces formats le long des lignes des parties (7) en les couches du film anticopie, la division et le pliage pouvant aussi être effectués dans l'ordre inverse.

2. Procédé selon la revendication 1, caractérisé par le fait qu'on applique les masques (S1 à S3) dans les dispositions décalées de manière définie simultanément sur la bande de film (6) en un seul passage d'impression.

3. Procédé selon l'une des revendications 1 et 2, caractérisé par le fait que, avant de plier l'une sur l'autre les couches du film (2), on applique de la colle sur au moins une des faces qui s'appliquent l'une sur l'autre et, sur les autres faces, un vernis protecteur protégeant des actions mécaniques ou chimiques ou empêchant la réflexion de la lumière.

4. Procédé selon l'une des revendications 1 à 3, caractérisé par le fait qu'on applique les masques (S1 à S3) sur un film dépoli et réduisant la réflexion de la lumière au moins sur une face.

5. Procédé selon l'une des revendications 1 à 4, caractérisé par le fait qu'on utilise pour les masques (S1 à S3) des encres d'impression durcissant sous l'action d'un rayonnement et réduisant au minimum les changements géométriques lors du séchage.

6. Film anticopie dans lequel sont appliquées par impression, sur les deux faces d'une première couche d'un film multicouche transparent (2), des masques en forme de bande opaques (S1, S2) de façon qu'ils se répètent régulièrement et soient décalés de manière définie les uns des autres et, sur la face inférieure d'au moins une deuxième couche, des masques semblables (S3) de façon qu'ils soient décalés de manière définie des premiers, caractérisé par le fait que les couches sont constituées de parties différentes (I, II) situées sur une bande unique de film (6), se suivant géométriquement et pourvues de masques en forme de bande, et que la répétition régulière et le décalage défini les uns des autres des masques (S1 à S3) sont obtenus par pliage de la bande de film (6) et superposition des différentes parties (I, II) de celle-ci.

7. Film anticopie selon la revendication 6, caractérisé par le fait qu'une colle est prévue sur au moins une des faces s'appliquant l'une sur l'autre par pliage des parties (I, II) de la bande de film (6).

8. Film anticopie selon la revendication 7, caractérisé par le fait que les faces dépourvues de colle des parties (I, II) de la bande de film (6) sont pourvues d'un vernis protecteur protégeant des actions mécaniques et/ou chimiques et/ou empêchant la réflexion de la lumière.

9. Film anticopie selon l'une des revendications 6 à 8, caractérisé par le fait que les masques (S1 à S3) sont constitués d'encres d'impression durcissant sous l'action d'un rayonnement et réduisant au minimum les changements géométriques lors du séchage.

10. Film anticopie selon l'une des revendications 6 à 9, caractérisé par le fait qu'il est constitué d'une bande de film transparente sur laquelle sont prévues dans la direction longitudinale ou la direction transversale au moins deux parties (I, II) placées parallèlement ou l'une derrière l'autre et sur lesquelles sont imprimés des masques en forme de bande (S1, S2, S3).
